# EUROPEAN PATENT APPLICATION

(11) **EP 4 851 870 A2**
(43) Date of publication of application: **09.12.2026**
(21) Application number: 26214907.3
(22) Date of filing: 28.10.2026
(51) Int. Cl.: G06N 5/043, G06N 20/00

(54) **CONVERSATIONAL AI AGENTIC ARCHITECTURE FOR ENTERPRISES**

(30) Priority: 31.10.2025 US 202519375724
(71) Applicant: AUTOMATION ANYWHERE, INC., San Jose, CA 95134 (US)
(72) Inventor: NUCCI, Antonio, San Jose, 95134 (US)
(74) Representative: Dennemeyer & Associates S.A.

(57) **Abstract**

An agentic AI system architecture able to respond to a user request includes multiple agents, each agent being assigned to a functional domain required by an enterprise. The agentic AI system architecture also includes at least one reasoning engine supported by at least one large language model (LLM), with the reasoning engine being able to interpret a user request and decompose the user request into one or more mini-tasks. An orchestrator module is connected to the reasoning engine and able to route those mini-tasks based on the user request to at least one of the multiple agents for further processing. Together, the orchestrator module and reasoning engine can collect and reconcile processed results from the multiple agents and prepare a response to the user request.

## Description

### RELATED APPLICATION

The present disclosure claims the priority benefit of U.S. Patent Application No. 19/375,724, filed on October 31, 2025, which is hereby incorporated by reference in its entirety.

### TECHNICAL FIELD

The present disclosure generally relates to use of a system and process for enabling a conversation capable artificial intelligence based system that utilizes multiple connected agents to support autonomous decision making and actions.

### BACKGROUND

The evolution of AI within enterprises has marked a transition from rigid, rule-based systems to more advanced, flexible architectures capable of understanding and executing complex tasks. Non-agentic AI systems, which rely on fixed workflows and predefined rules and experiences, have proven inadequate in addressing the dynamic needs of modern enterprises. Agentic AI architecture represents a transformative approach in the field of artificial intelligence, enabling the development and deployment of autonomous agents capable of dynamic learning, decision-making, and interaction within complex environments.

Enterprises adopting Agentic AI architecture can achieve significant benefits, including enhanced operational efficiency, improved decision-making, and more personalized user interactions. By automating complex tasks and continuously learning from real-time data, Agentic AI systems can optimize workflows, reduce operational costs, and respond more effectively to changing business needs. This adaptability not only drives higher productivity but also enables organizations to stay competitive in an increasingly dynamic marketplace.

### SUMMARY

In some embodiments, an agentic AI system architecture able to respond to a user request includes multiple agents, each agent being assigned to a functional domain required by an enterprise. The agentic AI system architecture also includes at least one reasoning engine supported by at least one large language model (LLM), with the reasoning engine being able to interpret a user request and decompose the user request into one or more mini-tasks. An orchestrator module is connected to the reasoning engine and able to route those mini-tasks based on the user request to at least one of the multiple agents for further processing. Together, the orchestrator module and reasoning engine can collect and reconcile processed results from the multiple agents and prepare a response to the user request.

In one embodiment, a method of orchestrating actions in an agentic AI system includes the steps of receiving a user request through an engagement channel. In a next step, a reasoning engine is used to analyze the received user request and in a task decomposition step identify one or more mini-tasks that require fulfillment. An orchestration module connected to the reasoning engine is used to determine which of multiple agents can be selected to fulfill the mini-tasks and each agent executes the respective mini-task and sends output to the orchestrator module for result aggregation.

In one embodiment, a method of operating an agentic AI system able to respond to a user request includes the steps selecting a set of multiple agents, each agent being assigned to a functional domain required by an enterprise. A reasoning engine supported by at least one large language model (LLM) is provided, with the reasoning engine acting to interpret a user request and decompose the user request into one or more mini-tasks. An orchestrator module connected to the reasoning engine provides for routing of mini-tasks based on the user request to at least one of the multiple agents for further processing. The orchestrator module and reasoning engine can collect and reconcile processed results from the multiple agents and prepare a response to the user request. In some embodiments, the agents can be dynamically added or removed from the set of multiple agents.

### Brief Description of the Drawings

Figure 1 depicts an agentic AI system architecture able to respond to user requests in accordance with an embodiment.
Figure 2 depicts a method of operating an agentic AI system in accordance with an embodiment.
Figure 3 depicts a computer system capable of supporting or acting as a component of the agentic AI system in accordance with an embodiment.

In the Figures, reference signs can be omitted as is consistent with accepted engineering practice; however, a skilled person will understand that the illustrated components are understood in the context of the Figures as a whole, of the accompanying writings about such Figures, and of the embodiments of the claimed inventions.

### DETAILED DESCRIPTION OF THE DRAWINGS

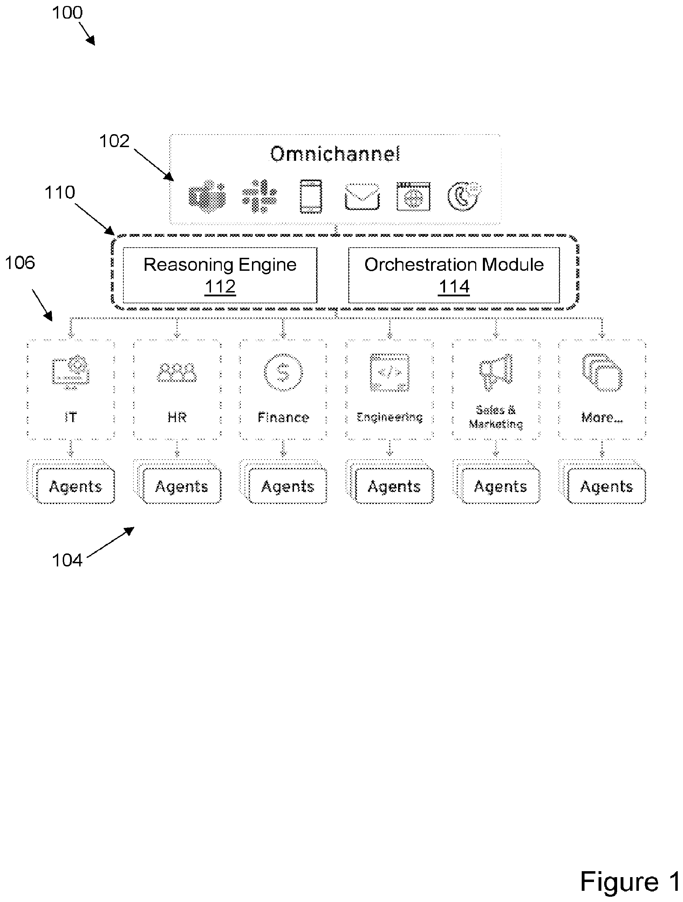

Figure 1 depicts an agentic AI system architecture 100 able to respond to user requests made through a communication omnichannel 102 in accordance with an embodiment for the purposes of the present technology. The system architecture 100 includes a set of multiple agents 104, each agent being assigned to various functional domains 106 required by an enterprise. In some embodiments, agents can be dynamically added or removed from the set of multiple agents. In some embodiments, the agents 104 can be external agents that can operate on distinct and separate enterprises with other system architectures and not be directly controlled by agentic AI system architecture 100. Interaction with agents 104 is provided by an AI system 110 that includes a reasoning engine 112 supported by at least one large language model (LLM), with the reasoning engine 112 being able to interpret a user request and decompose the user request into one or more mini-tasks. In some embodiments, the reasoning engine 112 can engage the user for clarification in response to the user request. This is of particular importance in scenarios where the user request is vague or ambiguous, and the reasoning engine needs to proactively engage the user for clarification. This step ensures that the reasoning engine 112 attains a clear and precise understanding of the request before moving forward.

The AI system 110 also includes an orchestrator/orchestration module 114 connected to the reasoning engine 112 that is able to route those mini-tasks based on an understood user request to at least one of the multiple agents for further processing. During operation, the orchestrator module 114 and reasoning engine can collect and reconcile processed results from the multiple agents and prepare a response to the user request delivered the communication omnichannel 102.

In some embodiments, the communication omnichannel 102 allows for receipt of a user request submitted through an engagement channel to the agentic AI system 100. The omnichannel 102 can include a wide range of communication platforms and modes of supporting user requests. For example, email, chat, telephone messages, chatbots, social media comments, or internal enterprise communication channels can all be used to provide user requests. In some embodiments, user requests can be associated with specific persons, while in other embodiments user requests can be associated with organizations, enterprise groups, or even totally or semi-automated AI or rules based services. In some embodiments, the engagement channel of omnichannel 102 can help select and prioritize user requests. For example, handling a user request can be based on time priority, organizational importance, emergency status, or user status. In other embodiments, user requests can be translated, edited, or otherwise modified by the engagement channel to better present the user request to the AI system 110 with included reasoning engine 112 and agents 104.

In some embodiments both the reasoning engine 112 and agents 104 can incorporate or have access to AI systems. Such AI systems can be based on machine learning models including those having reinforcement learning (RL), supervised learning models, unsupervised learning models, semi-supervised learning models, deep learning models, neural networks, simulated annealing models, ensemble models, and large language models (LLM). Various algorithms, techniques, and specific models usable in AI systems include but are not limited to GPT variants (e.g. Generative Pre-trained Transformer (GPT), GPT-2, GPT-3, GPT-4, DistillGPT2, OpenAI-GPT, or EleutherAI/gpt-j-6b) as well as models such as Large Language Model Meta AI (LLaMA), BERT, XLNet, or RoBERTa.

In some embodiments, use of reinforcement learning either the reasoning engine 112 or the agents 104 has particular advantages. Agentic AI systems utilize reinforcement learning (RL) to continuously enhance their performance through iterative learning and adaptation. Unlike traditional AI, which relies mostly on human-driven supervised learning, RL-based systems dynamically evolve by interacting with their environment and receiving feedback from these interactions. This adaptive learning process enables them to optimize their responses and decision-making capabilities over time, leading to more effective and efficient user interactions.

In reasoning engines, reinforcement learning significantly enhances AI by improving its grasp of key entities, abbreviations, synonyms, and context. RL enables the AI to continuously adapt to diverse user expressions and recognize varying terminology within specific domains. It helps the system interpret user queries more accurately and handle ambiguity more effectively by learning from past interactions. This ongoing adaptation allows the AI to clarify uncertainties quickly, streamline conversations, and deliver more precise, context-aware responses, ultimately optimizing user experience.

In some embodiments, the agentic AI system architecture 100 and included subsystems such as the reasoning engine 112, orchestration module 114, and agents 104 can be operated using a digital processor and data storage system. As used herein, a processor and a processor architecture are related concepts but refer to different aspects of computer systems. Specifically, a processor, such as a CPU or a GPU, performs calculations under the control of program instructions. The processor performs tasks such as arithmetic operations, logical operations, and data movement. 'Processor architecture', also referred to as computer architecture, encompasses the design and organization of a processor. It defines the structure, behavior, and functionality of the processor, including its instruction set, registers, memory organization, data paths, control units, and other internal components. Processor architecture provides the foundation that determines how the processor executes instructions, handles data, and interacts with other system components. Processor architecture influences factors like instruction set design, performance characteristics, power consumption, and compatibility with software. Multiple processors can share the same architecture, allowing for compatibility across different processor implementations. In some embodiments, processor architectures can include deterministic processor architectures or non-deterministic processor architectures. In some embodiment, processor architectures can include reduced instruction set computers (RISC) processors, complex instruction set computers (CISC) processors, application specific integrated circuits (ASIC) or field programmable gate-array (FPGA) configured to execute a certain instruction set architecture, as well as tensor streaming processors (TSP).

Typically, multiple intercommunicating processors are used to support the agentic AI system architecture 100. Embodiments of multi-chip systems can be implemented in a variety of topologies for flexible packaging and deployment in rack-scale, cluster scale, or cloud based systems. Communication occurs in a pair-wise manner between a sender port and a receiver port or can alternatively include broadcast communications.

In some embodiments, the reasoning engine 112 and agents 104 can operate using functional domains 106 as constraints that can simplify and improve reasoning tasks. Functional domains 106 can include but are not limited to Information Technology (IT), Human Resources (HR), Finance, Engineering, and Sales and Marketing. Both response to user requests by the reasoning engine and agent operation can benefit by logical structuring using functional domains. The reasoning engine 112 needs to accurately interpret and process user requests. By leveraging domain-specific Large Language Models (LLMs), the reasoning engine 112 can maximize its understanding of each request and minimize unnecessary or irrelevant interactions with users. Domain-specific LLMs allow tailoring to comprehend the unique terminology, jargon, and contextual nuances of specific fields, resulting in a more precise and relevant interpretation of user intents. Similarly, use of domain-specific LLMs in deployed specialized agents can be finely tuned to the specific needs and nuances of each department. By grouping agents according to their functional domain, organizations can streamline workflows, enhance task accuracy, and ensure that each agent operates within the context it understands best.

This domain-specific organization can act as a backbone for scalable and modular deployment of agentic AI systems. Enterprises can begin their adoption with specific domains, like deploying initial AI agents for HR to manage PTO requests and onboarding processes, and then gradually expand to other areas such as IT for user provisioning and troubleshooting, or Engineering for project management automation. As these AI agents become increasingly integrated into various workflows, the system can scale organically to encompass more functionalities and departments. This modular approach not only simplifies the implementation process but also makes it easier to manage and maintain the AI ecosystem as it grows.

The ability to compartmentalize and focus on functional domains also enhances the system's adaptability. As new business requirements emerge or as the organization scales, additional agents can be introduced and integrated seamlessly into the existing framework. This flexibility ensures that the agentic AI architecture evolves alongside the enterprise, consistently meeting its changing needs without necessitating a complete overhaul of existing systems. This logical, domain-oriented organization assists enterprises looking to achieve long-term success and high ROI from their investment in agentic AI solutions.

In some embodiments, hundreds, thousands, or more agents can be used to enable enterprise support using the AI system 110, with its reasoning engine 112 and orchestration module 114. Agents 104 can be designed to handle distinct tasks and are orchestrated by a one or more reasoning engines. In some embodiments, a single central reasoning engine can be used to ensure cohesive operation and orchestration across the system.

The agents in agentic AI can be categorized into five types: Generative Information Retrieval Agents (agents for knowledge serving for less-regulated environments / topics), Prescriptive Knowledge Agents (agents for knowledge serving for highly-regulated environments / topics), Dynamic Workflow Agents (Action Agents), and User Assistant Agents.

Generative Information Retrieval Agents are of particular use to enterprises when handling less-regulated environments or topics that need quick, accurate, and context-rich answers to user queries. These agents utilize advanced technologies such as Retrieval-Augmented Generation (RAG) to pull data from a wide range of enterprise sources, generating comprehensive responses that adapt to the nuances of each question. This capability is invaluable for addressing diverse and evolving queries, thus improving user experience and operational efficiency. In some embodiments, Generative Information Retrieval Agents can leverage reinforcement learning to enhance their knowledge delivery. These agents continuously update their knowledge bases and refine their ability to generate accurate and relevant answers through user interactions. As they accumulate experience from processing queries and feedback, they improve their contextual understanding and become more adept at providing precise responses. They also utilize historical data to handle similar inquiries with greater accuracy.

In the realm of IT troubleshooting, Generative Information Retrieval Agents can quickly diagnose and resolve technical issues by accessing internal databases, past support tickets, and user manuals. For example, if an employee reports connectivity problems, the agent can instantly search through logs, past incidents, and troubleshooting guides to pinpoint the issue and suggest steps for resolution. For example, these agents can provide step-by-step instructions for installing or updating software by referencing internal IT documentation and user manuals, ensuring the process is clear and error-free.

In HR settings, these agents are adept at managing a variety of employee queries regarding policies, benefits, and organizational procedures. For instance, if an employee inquiry about the company's remote work policy, the agent can retrieve the latest guidelines and ensure the response is up-to-date and accurate. For example, the agent can provide a list of public holidays, including any specific company holidays, ensuring employees have the correct and most recent information.

Generative Information Retrieval Agents can also significantly benefit Engineering teams by quickly accessing project documentation, past project experiences, and technical resources. For example, when an engineer faces a specific coding issue, the agent can pull relevant code snippets, troubleshooting steps, and solutions from past projects or documentation, thereby speeding up problem-solving. For example, an engineer needing details about project milestones or specifications can query the agent, which can then provide the necessary information from the company's project management tools or internal wikis.

Prescriptive Knowledge Agents excel in providing adaptive and context-rich responses by dynamically synthesizing information from various sources, there are environments where consistency, compliance, and predictability are paramount. In such cases, Prescriptive Knowledge Agents come into play. These agents deliver deterministic answers based on predefined workflows and curated datasets, ensuring that responses are both accurate and reliable. Unlike their generative counterparts, prescriptive agents adhere strictly to established guidelines and rules, making them ideal for regulated domains or scenarios where precise and compliant information is critical.

For IT, a Prescriptive Knowledge Agent can provide specific instructions for responding to data breaches, handling sensitive information, and following data compliance protocols such as GDPR or HIPAA.

Similarly, for HR, a Prescriptive Knowledge Agent can offer legally approved responses to sensitive issues such as reporting harassment, addressing mental wellness concerns (like suicidal thoughts), or dealing with racism and gender discrimination. These topics require carefully crafted responses that comply with legal requirements and organizational policies. Providing consistent, pre-approved answers ensures that the information is accurate, legally compliant, and sensitive to the emotional needs of the employees involved.

For Engineering, a Prescriptive Knowledge Agent can provide detailed, predefined instructions for adhering to safety regulations, conducting equipment maintenance, and following operational standards. This includes step-by-step guides for safe machine operation, routine maintenance checklists, and emergency shutdown procedures. In the engineering domain, precise adherence to safety and operational standards is essential to prevent accidents and ensure compliance with industry regulations. Predefined responses ensure that engineers follow established guidelines accurately, minimizing the risk of errors and maintaining a safe work environment. Additionally, compliance with these standards is often legally mandated, making consistent and correct guidance critical.

While Generative Information Retrieval Agents excel at providing adaptive, context-rich answers by synthesizing information from various sources, and Prescriptive Knowledge Agents ensure compliance and reliability through consistent, predefined responses, another realm of AI exists that takes operational efficiency to the next level is known as Dynamic Workflow Agents. These specialized agents perform tasks involving interaction with multiple external applications and systems. They are capable of breaking down requests into specific sequences of API calls, executing these calls, and checking for errors and correctness along the way.

Dynamic Workflow Agents represent a significant advancement in automating complex workflows and enhancing operational efficiency. Unlike traditional workflows, which are often rigid and limited to executing predefined API calls, these agents dynamically discover necessary APIs (discovery), determine the correct sequence of operations (plan), and autonomously execute and verify tasks (execution). This flexibility allows them to handle a wide variety of user requests in real-time, offering a more adaptive and intelligent approach to workflow automation.

Moreover, Dynamic Workflow Agents offer scalability and adaptability that traditional workflows cannot match. As new features are added to an application or as APIs evolve, the agents can automatically adjust their operations without requiring manual reconfiguration. This flexibility is particularly valuable in dynamic environments where business requirements and technological capabilities are constantly changing.

For instance, in a traditional setup within an HR system, managing Paid Time Off (PTO) requests might require multiple workflows. Each workflow would be specialized for different scenarios-approving PTO, updating balances, notifying managers, and adjusting payroll. These workflows are often hardcoded, requiring manual updates whenever business processes or APIs change. In contrast, AI action agents can streamline the entire PTO management process. When an employee submits a PTO request, a trained AI agent can automatically discover all relevant APIs-such as those for checking PTO balances, processing approvals, and updating records. The agent then dynamically determines the correct order in which these APIs should be invoked and executes the entire process autonomously. This not only eliminates the need for multiple manual workflows but also ensures that the process is more reliable and less prone to errors, as the agent continuously verifies each step of the execution.

Similar benefits can be achieved in any other domains like Engineering (e.g., managing tasks in Jira like creating tasks, assigning them, updating status, adding comments), IT (e.g., managing teams, permissions, channels and groups in team support software).

Building on the capabilities of AI Workflow Agents, which streamline and automate intricate tasks across various applications are User Assistant Agents. While Workflow Agents focus on managing system operations and integrations, User Assistant Agents are designed to assist individual users directly with their day-to-day activities, making their work more efficient and productive. User Assistant Agents can perform a wide range of tasks that simplify routine operations. In some embodiments, User Assistant Agents can benefit from reinforcement learning by continuously learning from user interactions. This ongoing process enhances their understanding of the specific user needs and preferences, allowing them to deliver more personalized and effective assistance.

For example, in IT, User Assistant Agents can support employees daily need to schedule meetings with team members, stakeholders, or vendors for project discussions and reviews. The scheduling agent finds mutually available times by accessing calendars, sends out meeting invitations, and sets up virtual or physical meeting spaces. This automates the scheduling process, reduces back-and-forth communications, and ensures efficient meeting planning.

As another example, in HR, User Assistant Agents can support an employee who needs to prepare various documents such as job descriptions, policy updates, and employee handbooks. The document drafting agent can generate initial drafts based on templates and user inputs, which the HR team can then review and finalize. This speeds up the document creation process and ensures consistency across all HR documentation.

As another example, in Engineering, User Assistant Agents can support Engineers regularly need to communicate technical updates, project progress, or bug reports with their team or stakeholders. The email-writing agent drafts clear, concise, and professionally worded emails based on brief user inputs, ensuring technical accuracy and coherence. This saves engineers time and ensures consistent communication standards.

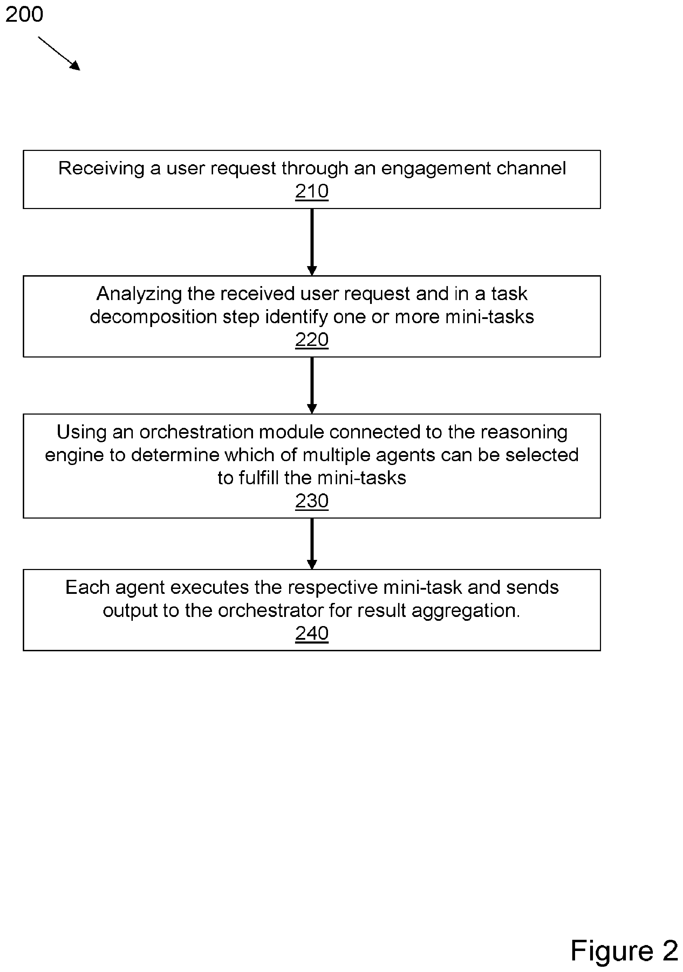

Figure 2 depicts a flow chart 200 for implementing a method of orchestrating actions in an agentic AI system. In a first step 210, a user request is received through an engagement channel. In a second step 220, a reasoning engine is used to analyze the received user request and in a task decomposition step to identify one or more mini-tasks that require fulfillment. In step 230, an orchestration module connected to the reasoning engine is used to determine which of multiple agents can be selected to fulfill the mini-tasks. Optionally, each agent can be assigned to a functional domain required by an enterprise. In step 240, each agent executes the respective mini-task and sends output to the orchestrator for result aggregation.

In some embodiments, during execution of the flow chart of Figure 2, the orchestration module can act in an unsupervised mode to discover which of multiple agents are needed to fulfill the user request, plan a sequence of agent invocation, execute the plan, and verify execution correctness.

In some embodiments, during execution of the flow chart of Figure 2, the orchestration module can act in a supervised mode with mini-tasks and agents used being externally provided.

In some embodiments, during execution of the flow chart of Figure 2, the orchestration module can act in a semi-supervised mode with mini-tasks being externally provided and the agents used being determined by the agentic AI system.

In some embodiments, during execution of the flow chart of Figure 2, each agent independently executes the respective mini-task. In other embodiments, agents can interact with other agents to execute the respective mini-task.

As used herein, 'data' and 'information' can be used interchangeably (e.g., 'data processing' and 'information processing'). In some embodiments, the term 'datum' (plural 'data') can signify a representation of the value or the answer to a question (e.g., "yes" or "no"), while the term 'information' can signify a set of data with structure (often signified by 'data structure'). A data structure is used in commerce to transform an electronic device for use as a specific machine as an article of manufacture. Data and information are physical objects, for example binary data (a 'bit', usually signified with '0' and '1') enabled with two levels of voltage in a digital circuit or electronic component. For example, data can be enabled as an electrical, magnetic, optical or acoustical signal or state; a quantum state such as a particle spin that enables a 'qubit'; or a physical state of an atom or molecule. All such data and information, when enabled, are stored, accessed, transferred, combined, compared, or otherwise acted upon, actions that require and dissipate energy.

As used herein, the term 'process' signifies an artificial finite ordered set of physical actions ('action' also signified by 'operation' or 'step') to produce at least one result. Some types of actions include transformation and transportation. An action is a technical application of one or more natural laws of science or artificial laws of technology. An action often changes the physical state of a machine, of structures of data and information, or of a composition of matter. Two or more actions can occur at about the same time, or one action can occur before or after another action, if the process produces the same result. A description of the physical actions and/or transformations that comprise a process are often signified with a set of gerund phrases (or their semantic equivalents) that are typically preceded with the signifier 'the steps of' (e.g., "a process comprising the steps of measuring, transforming, partitioning and then distributing ..."). The signifiers 'algorithm', 'method', 'procedure', '(sub)routine', 'protocol', 'recipe', and 'technique' often are used interchangeably with 'process', and 35 U.S.C. 100 defines a "method" as one type of process that is, by statutory law, always patentable under 35 U.S.C. 101. As used herein, the term 'thread' signifies a subset of an entire process. A process can be partitioned into multiple threads that can be used at or about at the same time.

As used herein, the term 'rule' signifies a process with at least one logical test (signified, e.g., by 'IF test IS TRUE THEN DO process'). As used herein, a 'grammar' is a set of rules for determining the structure of information. Many forms of knowledge, learning, skills and styles are authored, structured, and enabled - objectively - as processes and/or rules - e.g., knowledge and learning as functions in knowledge programming languages.

As used herein, the term 'component' (also signified by 'part', and typically signified by 'element' when described in a patent text or diagram) signifies a physical object that is used to enable a process in combination with other components. For example, electronic components are used in processes that affect the physical state of one or more electromagnetic or quantum particles/waves (e.g., electrons, photons) or quasiparticles (e.g., electron holes, phonons, magnetic domains) and their associated fields or signals. Electronic components have at least two connection points which are attached to conductive components, typically a conductive wire or line, or an optical fiber, with one conductive component end attached to the component and the other end attached to another component, typically as part of a circuit with current or photon flows. There are at least three types of electrical components: passive, active and electromechanical. Passive electronic components typically do not introduce energy into a circuit - such components include resistors, memristors, capacitors, magnetic inductors, crystals, Josephson junctions, transducers, sensors, antennas, waveguides, etc. Active electronic components require a source of energy and can inject energy into a circuit - such components include semiconductors (e.g., diodes, transistors, optoelectronic devices), vacuum tubes, batteries, power supplies, displays (e.g., LEDs, LCDs, lamps, CRTs, plasma displays). Electromechanical components affect current flow using mechanical forces and structures - such components include switches, relays, protection devices (e.g., fuses, circuit breakers), heat sinks, fans, cables, wires, terminals, connectors and printed circuit boards.

As used herein, the term 'module' signifies a tangible structure for acting on data and information. For example, the term 'module' can signify a process that transforms data and information, for example, a process comprising a computer program (defined below). The term 'module' also can signify one or more interconnected electronic components, such as digital logic devices. A process comprising a module, if specified in a programming language, also can be transformed into a specification for a structure of electronic components that transform data and information that produce the same result as the process.

A module can be permanently structured (e.g., circuits with unalterable connections), temporarily structured (e.g., circuits or processes that are alterable with sets of data), or a combination of the two forms of structuring. Permanently structured modules can be manufactured, for example, using Application Specific Integrated Circuits ('ASICs') such as Arithmetic Logic Units ('ALUs'), Programmable Logic Arrays ('PLAs'), or Read Only Memories ('ROMs'), all of which are typically structured during manufacturing. For example, a permanently structured module can comprise an integrated circuit. Temporarily structured modules can be manufactured, for example, using Field Programmable Gate Arrays (FPGAs), Random Access Memories (RAMs) or microprocessors. For example, data and information is transformed using data as an address in RAM or ROM memory that stores output data and information. One can embed temporarily structured modules in permanently structured modules (for example, a FPGA embedded into an ASIC).

As used herein, the term 'processor' signifies a tangible data and information processing machine for use in commerce that physically transforms, transfers, and/or transmits data and information, using at least one process. A processor consists of one or more modules, e.g., a central processing unit ('CPU') module; an input/output ('I/O') module, a memory control module, a network control module, and/or other modules. The term 'processor' can also signify one or more processors, or one or more processors with multiple computational cores/CPUs, specialized processors (for example, graphics processors or signal processors), and their combinations. Where two or more processors interact, one or more of the processors can be remotely located relative to the position of the other processors. Where the term 'processor' is used in another context, such as a 'chemical processor', it will be signified and defined in that context.

The processor can comprise, for example, digital logic circuitry (for example, a binary logic gate), and/or analog circuitry (for example, an operational amplifier). The processor also can use optical signal processing, quantum operations, or a combination of technologies, such as an optoelectronic processor. For data and information structured with binary data, any processor that can transform data and information using the AND, OR and NOT logical operations (and their derivatives, such as the NAND, NOR, and XOR operations) also can transform data and information using any function of Boolean logic. A processor such as an analog processor, such as an artificial neural network, also can transform data and information.

The one or more processors also can use a process in a 'cloud computing' or 'timesharing' environment, where time and resources of multiple remote computers are shared by multiple users or processors communicating with the computers. For example, a group of processors can use at least one process available at a distributed or remote system, these processors using a communications network (e.g., the Internet, or an Ethernet) and using one or more specified network interfaces ('interface' defined below) (e.g., an application program interface ('API') that signifies functions and data structures to communicate with the remote process).

As used herein, the term 'computer' and 'computer system' (further defined below) includes at least one processor that, for example, performs operations on data and information such as (but not limited to) the Boolean logical operations using electronic gates that can comprise transistors, with the addition of memory (for example, memory structured with flip-flops using the NOT-AND or NOT-OR operation). A computer can comprise a simple structure, for example, comprising an I/O module, a CPU module, and a memory that performs, for example, the process of inputting a signal, transforming the signal, and outputting the signal with no human intervention.

As used herein, the term 'programming language' signifies a structured grammar for specifying sets of operations and data for use by modules, processors and computers. Programming languages include assembler instructions, instruction-set-architecture instructions, machine instructions, machine dependent instructions, microcode, firmware instructions, state-setting data, or either source code or object code written in any combination of one or more higher level languages, for example, the C programming language and similar general programming languages (such as Fortran, Basic, Javascript, PHP, Python, C++), knowledge programming languages (such as Lisp, Smalltalk, Prolog, or CycL), electronic structure programming languages (such as VHDL, Verilog, SPICE or SystemC), text programming languages (such as SGML, HTML, or XML), or audiovisual programming languages (such as SVG, MathML, X3D/VRML, or MIDI), and any future equivalent programming languages. As used herein, the term 'source code' signifies a set of instructions and data specified in text form using a programming language.

As used herein, the term 'program' (also referred to as an 'application program') signifies one or more processes and data structures that structure a module, processor or computer to be used as a specific machine. One use of a program is to structure one or more computers, for example, standalone, client or server computers, or one or more modules, or systems of one or more such computers or modules. As used herein, the term 'computer application' signifies a program that enables a specific use, for example, to enable text processing operations, or to encrypt a set of data. As used herein, the term 'firmware' signifies a type of program that typically structures a processor or a computer, where the firmware is smaller in size than a typical application program and is typically not very accessible to or modifiable by the user of a computer. Computer programs and firmware are often specified using source code written in a programming language, such as C. Modules, circuits, processors, programs and computers can be specified at multiple levels of abstraction and have value as products in commerce as taxable goods.

A program can be transferred into one or more memories of the computer or computer system from a data and information device or storage system. A computer system typically has a device for reading storage media that is used to transfer the program, and/or has an interface device that receives the program over a network.

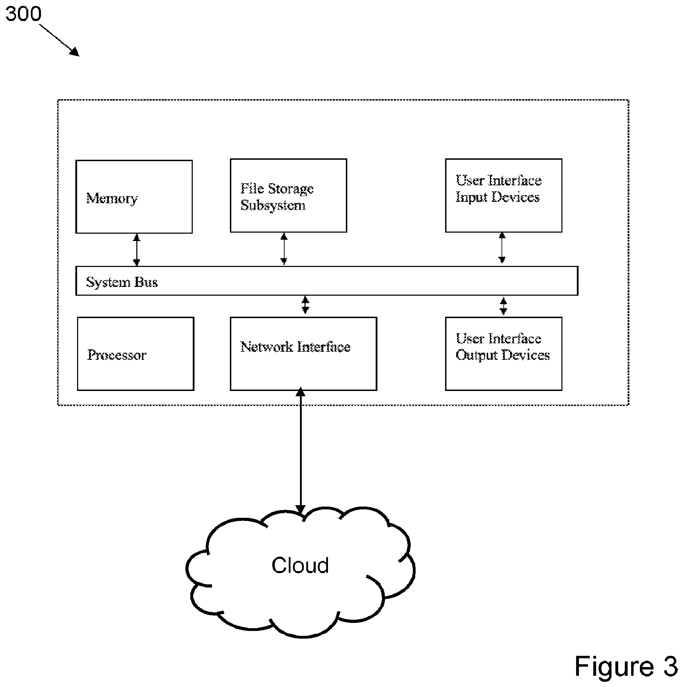

As will be understood, a computer system 300 such as illustrated with respect to Figure 3 is suitable for supporting embodiments described in this disclosure and can include at least one computer which communicates with peripheral devices via bus subsystem. Typically, as depicted in Figure 3, the computer includes a processor (e.g., a microprocessor, graphics processing unit, or digital signal processor), or its electronic processing equivalents, such as an Application Specific Integrated Circuit ('ASIC') or Field Programmable Gate Array ('FPGA'). Typically, peripheral devices include a storage subsystem, comprising a memory subsystem and a file storage subsystem, user interface input devices, user interface output devices, and/or a network interface subsystem. The input and output devices enable direct and remote user interaction with the computer system. The computer system enables significant post-process activity using at least one output device and/or the network interface subsystem.

The computer system can be structured as a server, a client, a workstation, a mainframe, a personal computer (PC), a tablet PC, a set-top box (STB), a personal digital assistant (PDA), a cellular telephone, a smartphone, a web appliance, a rack-mounted 'blade', a kiosk, a television, a game station, a network router, switch or bridge, or any data processing machine with instructions that specify actions to be taken by that machine. The term 'server', as used herein, refers to a computer or processor that typically performs processes for, and sends data and information to, another computer or processor. In some embodiments, the computer system can send data or distribute processes to a computer cloud or other available collections of computing systems.

A computer system typically is structured, in part, with at least one operating system program. The computer system typically includes a Basic Input/Output System (BIOS) and processor firmware. The operating system, BIOS and firmware are used by the processor to structure and control any subsystems and interfaces connected to the processor.

Any embodiment is limited neither to an electronic digital logic computer structured with programs nor to an electronically programmable device. For example, the claimed inventions can use an optical computer, a quantum computer, an analog computer, or the like. Further, where only a single computer system or a single machine is signified, the use of a singular form of such terms also can signify any structure of computer systems or machines that individually or jointly use processes.

Network interface subsystem provides an interface to outside networks, including an interface to a communication network, and is coupled via communication network to corresponding interface devices in other computer systems or machines. Communication networks can comprise many interconnected computer systems, machines and physical communication connections (signified by 'links'). These communication links can be wireline links, optical links, wireless links (e.g., using the WiFi or Bluetooth protocols), or any other physical devices for communication of information. Communication network 18 can be any suitable computer network, for example a wide area network such as the Internet, and/or a local-to-wide area network such as Ethernet. The communication network is wired and/or wireless, and many communication networks use encryption and decryption processes, such as is available with a virtual private network. The communication network uses one or more communications interfaces, which receive data from, and transmit data to, other systems. Embodiments of communications interfaces typically include an Ethernet card, a modem (e.g., telephone, satellite, cable, or ISDN), (asynchronous) digital subscriber line (DSL) unit, Firewire interface, USB interface, and the like. Communication algorithms ('protocols') can be specified using one or communication languages, such as HTTP, TCP/IP, RTP/RTSP, IPX and/or UDP.

User interface input devices can include an alphanumeric keyboard, a keypad, pointing devices such as a mouse, trackball, toggle switch, touchpad, stylus, a graphics tablet, an optical scanner such as a bar code reader, touchscreen electronics for a display device, audio input devices such as voice recognition systems or microphones, eye-gaze recognition, brainwave pattern recognition, optical character recognition systems, and other types of input devices. Such devices are connected by wire or wirelessly to a computer system. Typically, the term 'input device' signifies all possible types of devices and processes to transfer data and information into a computer system or onto a communication network. User interface input devices typically enable a user to select objects, icons, text and the like that appear on some types of user interface output devices, for example, a display subsystem.

User interface output devices can include a display subsystem, a printer, a fax machine, or a non-visual communication device such as audio and haptic devices. The display subsystem can include a flat-panel device such as a liquid crystal display (LCD), an image projection device, or some other device for creating visible stimuli such as a virtual reality system. The display subsystem also can provide non-visual stimuli such as via audio output, aroma generation, or tactile/haptic output (e.g., vibrations and forces) devices. Typically, the term 'output device' signifies all possible types of devices and processes to transfer data and information out of a computer system to the user or to another machine or computer system. Such devices are connected by wire or wirelessly to a computer system.

The memory subsystem typically includes a number of memories including a main random-access memory ('RAM') (or other volatile storage device) for storage of instructions and data during program execution and a read only memory ('ROM') in which fixed instructions are stored. File storage subsystem provides persistent storage for program and data files, and can include a solid state memory module, a magnetic hard disk, an optical drive, a flash memory such as a USB drive, or removable media cartridges. If the computer system includes an input device that performs optical character recognition, then text and symbols printed on a physical object (such as paper) can be used as a device for storage of program and data files. The databases and modules used by some embodiments can be stored by file storage subsystems.

The bus subsystem provides a device for transmitting data and information between the various components and subsystems of the computer system. Although the bus subsystem is depicted as a single bus, alternative embodiments of the bus subsystem can use multiple buses. For example, a main memory using RAM can communicate directly with file storage systems using Direct Memory Access ('DMA') systems.

The memory can include a non-transitory, processor readable data and information storage medium associated with file storage subsystem, and/or with network interface subsystem, and can include a data structure specifying a circuit design. The memory can be a solid state memory module, a magnetic hard disk, an optical medium, a removable media cartridge, or any other medium that stores computer readable data in a volatile or non-volatile form, such as text and symbols on a physical object (such as paper) that can be processed by an optical character recognition system. A program transferred into and out of a processor from such a memory can be transformed into a physical signal that is propagated through a medium (such as a network, connector, wire, or circuit trace as an electrical pulse); or through a medium such as space or an atmosphere as an acoustic signal, or as electromagnetic radiation with wavelengths in the electromagnetic spectrum longer than infrared light.

The Detailed Description signifies in isolation the individual features, structures, functions, or characteristics described herein and any combination of two or more such features, structures, functions or characteristics, to the extent that such features, structures, functions or characteristics or combinations thereof are enabled by the Detailed Description as a whole in light of the knowledge and understanding of a skilled person, irrespective of whether such features, structures, functions or characteristics, or combinations thereof, solve any problems disclosed herein, and without limitation to the scope of the Claims herein. When an embodiment comprises a particular feature, structure, function or characteristic, it is within the knowledge and understanding of a skilled person to use such feature, structure, function, or characteristic in connection with another embodiment whether or not explicitly described, for example, as a substitute for another feature, structure, function or characteristic.

In view of the Detailed Description, a skilled person will understand that many variations of any embodiment can be enabled, such as function and structure of elements, described herein while being as useful as the embodiment. One or more elements of an embodiment can be substituted for one or more elements in another embodiment, as will be understood by a skilled person. Writings about any embodiment signify its use in commerce, thereby enabling other skilled people to similarly use this embodiment in commerce.

This Detailed Description is written to provide knowledge and understanding. Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims. It is also understood that other embodiments of this invention may be practiced in the absence of an element/step not specifically disclosed herein.

Additionally, This Detailed Description is to be accorded the widest scope consistent with the disclosed principles and features. Without limitation, any and all equivalents described, signified or Incorporated By Reference (or explicitly incorporated) in this patent application are specifically incorporated into the Detailed Description. In addition, any and all variations described, signified or incorporated with respect to any one embodiment also can be included with any other embodiment. Any such variations include both currently known variations as well as future variations, for example any element used for enablement includes a future equivalent element that provides the same function, regardless of the structure of the future equivalent element.

It is intended that the domain of the set of claimed inventions and their embodiments be defined and judged by the following Claims and their equivalents. The Detailed Description includes the following Claims, with each Claim standing on its own as a separate claimed invention. Any embodiment can have more structure and features than are explicitly specified in the Claims.

## Claims

1. An agentic AI system architecture able to respond to a user request, comprising:
multiple agents, each agent being assigned to a functional domain required by an enterprise;
a reasoning engine supported by at least one large language model (LLM), with the reasoning engine being able to interpret a user request and decompose the user request into one or more mini-tasks;
an orchestrator module connected to the reasoning engine and able to route those mini-tasks based on the user request to at least one of the multiple agents for further processing; and wherein
the orchestrator module and reasoning engine can collect and reconcile processed results from the multiple agents and prepare a response to the user request.

2. The agentic AI system architecture of claim 1, wherein multiple LLMs are used to assist in domain specific interpretation of the user request.

3. The agentic AI system architecture of claim 1, wherein the reasoning engine can engage the user for clarification in response to the user request.

4. The agentic AI system architecture of claim 1, wherein the reasoning engine supports reinforcement learning.

5. The agentic AI system architecture of claim 1, wherein the multiple agents further comprise at least some external agents.

6. The agentic AI system architecture of claim 1, wherein functional domains further comprise at least one of IT, HR, Finance, Engineering, and Sales and Marketing.

7. The agentic AI system architecture of claim 1, wherein the user request is submitted through an engagement channel to the agentic AI System.

8. A method of orchestrating actions in an agentic AI system, comprising the steps of:
receiving a user request through an engagement channel;
using a reasoning engine to analyze the received user request and in a task decomposition step identify one or more mini-tasks that require fulfillment;
using an orchestration module connected to the reasoning engine to determine which of multiple agents can be selected to fulfill the mini-tasks; and wherein
each agent executes the respective mini-task and sends output to the orchestrator module for result aggregation.

9. A method of orchestrating actions in the agentic AI system of claim 8, wherein the orchestration module can act in an unsupervised mode to discover which of multiple agents are needed to fulfill the user request, plan a sequence of agent invocation, execute the plan, and verify execution correctness.

10. A method of orchestrating actions in the agentic AI system of claim 8, wherein the orchestration module can act in a supervised mode with mini-tasks and agents used being externally provided.

11. A method of orchestrating actions in the agentic AI system of claim 8, wherein the orchestration module can act in a semi-supervised mode with mini-tasks being externally provided and the agents used being determined by the agentic AI system.

12. A method of orchestrating actions in the agentic AI system of claim 8, wherein each agent independently executes the respective mini-task.

13. A method of orchestrating actions in the agentic AI system of claim 8, wherein agents can interact with other agents to execute the respective mini-task.

14. A method of orchestrating actions in the agentic AI system of claim 8, wherein each agent is assigned to a functional domain required by an enterprise.

15. A method of operating an agentic AI system able to respond to a user request, comprising the steps of:
selecting a set of multiple agents, each agent being assigned to a functional domain required by an enterprise;
providing a reasoning engine supported by at least one large language model (LLM), with the reasoning engine acting to interpret a user request and decompose the user request into one or more mini-tasks;
providing an orchestrator module connected to the reasoning engine and routing mini-tasks based on the user request to at least one of the multiple agents for further processing; and wherein
the orchestrator module and reasoning engine can collect and reconcile processed results from the multiple agents and prepare a response to the user request.
